# EUROPÄISCHE PATENTSCHRIFT

(11) **EP 2 394 888 B1**
(45) Veröffentlichungstag und Bekanntmachung des Hinweises auf die Patenterteilung: **25.03.2015**
(21) Anmeldenummer: 11004502.8
(22) Anmeldetag: 01.06.2011
(51) Int. Cl.: B62D 53/08, B62D 21/12, B60P 1/64, B60P 3/30, B62D 21/09

(54) **Schnellwechselrahmen für Aufbauten von Nutzfahrzeugen sowie Nutzfahrzeug**
Quick assembly frame for the body of commercial vehicles, and commercial vehicle
Chassis de montage rapide de caisses de véhicules utilitaires, et véhicule utilitaire

(30) Priorität: 09.06.2010 DE 202010007752 U
(43) Veröffentlichungstag der Anmeldung: 14.12.2011
(73) Patentinhaber: Gmeiner GmbH, 92533 Wernberg-Köblitz (DE)
(72) Erfinder: Müller, Wilfried, 77704 Oberkirch (DE); Wallner, Johannes, 92714 Pleystein (DE)
(74) Vertreter: Graf Glück Kritzenberger

(56) Entgegenhaltungen:
- EP-A1- 0 230 493
- EP-A1- 0 481 252
- DE-A1- 1 946 929
- DE-A1- 3 708 641
- DE-A1- 3 829 716
- FR-A- 1 197 434
- US-A- 3 770 296
- US-A- 3 900 213

## Beschreibung

Die Erfindung betrifft einen Schnellwechselrahmen für Aufbauten von Nutzfahrzeugen gemäß dem Oberbegriff des Patentanspruches 1 sowie ein Nutzfahrzeug gemäß dem Oberbegriff des Patentanspruches 10.

Schnellwechselrahmen für Aufbauten von Nutzfahrzeugen sind aus dem Stand der Technik bereits bekannt. Derartige Schnellwechselrahmen sind unterhalb von auf den Nutzfahrzeugen zu montierenden Aufbauten befestigt und dienen der Auswechselbarkeit von Aufbauten eines Nutzfahrzeugs. Durch die Verwendung von Schnellwechselrahmen werden flexible Einsatzmöglichkeiten von Nutzfahrzeugen bzw. von auf den Schnellwechselrahmen befestigbaren Aufbauten erreicht.

Aus der DE 1946929 A1 ist bereits ein Wechselaufbau zur lösbaren Verbindung mit dem Fahrgestell eines Nutzfahrzeuges bekannt, wobei die lösbare Verbindung über eine Kupplung herstellbar ist, bei der ein Zapfen als Königszapfen mit einer Sattelkupplung einer Sattelzugmaschine zusammenwirkt. Vergleichbare Wechselaufbauten und Kupptungssysteme sind in der US 3,900,213 A, US 3,770,296 und EP 0 230493 A1 offenbart.

Speziell bei Streuaufsätzen für den Winterdienst besteht die Notwendigkeit der Montage dieser Streuaufsätze am Nutzfahrzeug über einen Schnellwechselrahmen. Da derartige Streuaufsätze lediglich im Winter benötigt werden, können Nutzfahrzeuge, die im Winter nicht oder nur wenig benutzt werden, beispielsweise Nutzfahrzeuge der Baubranche, im Winterdienst eingesetzt werden.

Besonders Sattelzugmaschinen sind aufgrund Ihrer hohen zulässigen Achslast für den Winterdienst sehr geeignet. Sie weisen eine Sattelkupplung auf, an der beispielsweise Sattelauflieger durch Einführen eines als Königszapfen ausgebildeten Zapfens angekuppelt werden können.

Ausgehend hiervon ist es Aufgabe der Erfindung, einen Schnellwechselrahmen für Sattelzugmaschinen anzugeben, der einen einfachen Aufbau aufweist und zeitsparend an der Sattelzugmaschine zu montieren ist. Darüber hinaus ist es Aufgabe der Erfindung, ein Nutzfahrzeug mit einem Streuaufsatz anzugeben, das einen im Vergleich zum Stand der Technik reduziertes Gewicht aufweist, sodass das zulässige Gesamtgewicht der Sattelzugmaschine optimal ausgenutzt werden kann. Die Aufgaben werden ausgehend von den Oberbegriffen der Patentansprüche 1 und 10 jeweils durch deren kennzeichnende Merkmale gelöst.

Der wesentliche Aspekt der Erfindung besteht darin, dass der Schnellwechselrahmen ein Befestigungselement in Form eines Zapfens aufweist, der von der durch die Rahmenkonstruktion des Schnellwechselrahmens aufgespannten Ebene nach unten absteht, wobei der Zapfen als Königszapfen zum Zusammenwirken mit einer Sattelkupplung mit einer Sattelzugmaschine ausgebildet ist. Die Montage eines derartigen Schnellwechselrahmens erfolgt damit äußerst zeitsparend, da dieser Schnellwechselrahmen mit dem darauf montierten Aufbau lediglich derart unterfahren werden muss, dass der Königszapfen in die Sattelkupplung der Sattelzugmaschine eingeführt wird. Durch die sich in Richtung des Schnellwechselrahmens öffnende keilförmige Aufnahme der Sattelkupplung wird der Schnellwechselrahmen auch bei einem leichten Versatz des Nutzfahrzeugs gegenüber dem Schnellwechselrahmen lagerichtig platziert.

Der Königszapfen ist an einem Zwischenträger angeordnet, der in Längsrichtung verstellbar gegenüber der Rahmenkonstruktion des Schnellwechselrahmens ist. Dadurch kann der Schnellwechselrahmen einfach an unterschiedliche Sattelzugmaschinen, insbesondere Sattelzugmaschinen mit unterschiedlicher Achsenanzahl angepasst werden.

In einem weiteren bevorzugten Ausführungsbeispiel ist der Schnellwechselrahmen zur Aufnahme eines Streuaufsatzes für den Winterdienst ausgebildet. Um die Achslast der Sattelzugmaschine optimal ausnutzen zu können, ist der Streuaufsatz gewichtsreduziert ausgebildet. Diese Gewichtsreduktion kann zum einen durch Verwendung von leicht bauenden Metallen bzw. Stählen oder Kunststoffen für die Streuaufsatzwandung erfolgen, zum anderen kann die oberseitige Öffnung des Streuaufsatzes, über die das Streumittel in den Streuaufsatz einführbar ist, durch ein Kunststoffgitter oder mehrere Kunststoffgitterelemente zumindest teilweise überspannt sein. Dieses Kunststoffgitter kann vorzugsweise eine Glasfaserverstärkung beinhalten. Dadurch kann im Vergleich zur Verwendung von Gitterabdeckungen aus Stahl eine deutliche Gewichtsreduzierung erreicht werden.

Die Erfindung soll nachfolgend anhand von einem Ausführungsbeispiel im Zusammenhang mit Figuren näher erläutert werden. Zudem ergeben sich Weiterbildungen, Vorteile und Anwendungsmöglichkeiten der Erfindung auch aus der nachfolgenden Beschreibung des Ausführungsbeispiels und aus den Figuren. Dabei sind alle beschriebenen und/oder bildlich dargestellten Merkmale für sich oder in beliebiger Kombination grundsätzlich Gegenstand der Neuerung, unabhängig von ihrer Zusammenfassung in den Ansprüchen oder deren Rückbeziehung. Auch wird der Inhalt der Ansprüche zu einem Bestandteil der Beschreibung gemacht.

Es wird aber ausdrücklich darauf hingewiesen, dass die Erfindung keinesfalls auf das angegebene Beispiel beschränkt sein soll. Die Figuren zeigen:
- Fig. 1: beispielhaft ein erfindungsgemäßer Schnellwechselrahmen in einer Draufsichtdarstellung;
- Fig. 2: beispielhaft ein erfindungsgemäßer Schnellwechselrahmen in einer Seitendarstellung;
- Fig. 3: beispielhaft ein Nutzfahrtzeug mit einem auf einem erfindungsgemäßen Schnellwechselrahmen montierten Streuaufsatz;
- Fig. 4: beispielhaft ein Streuaufsatz mit einem Kunststoffgitter in einer Draufsichtdarstellung;

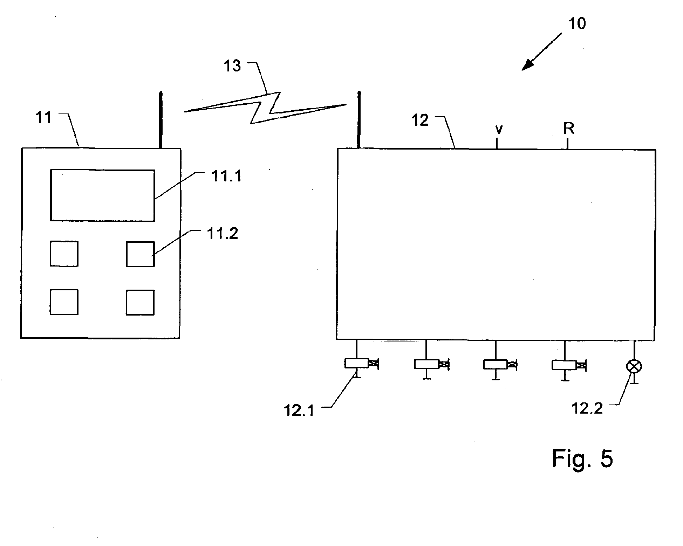

- Fig. 5: beispielhaft eine Steuerungsvorrichtung zur Ansteuerung eines Streuaufsatzes in einer schematischen Darstellung.

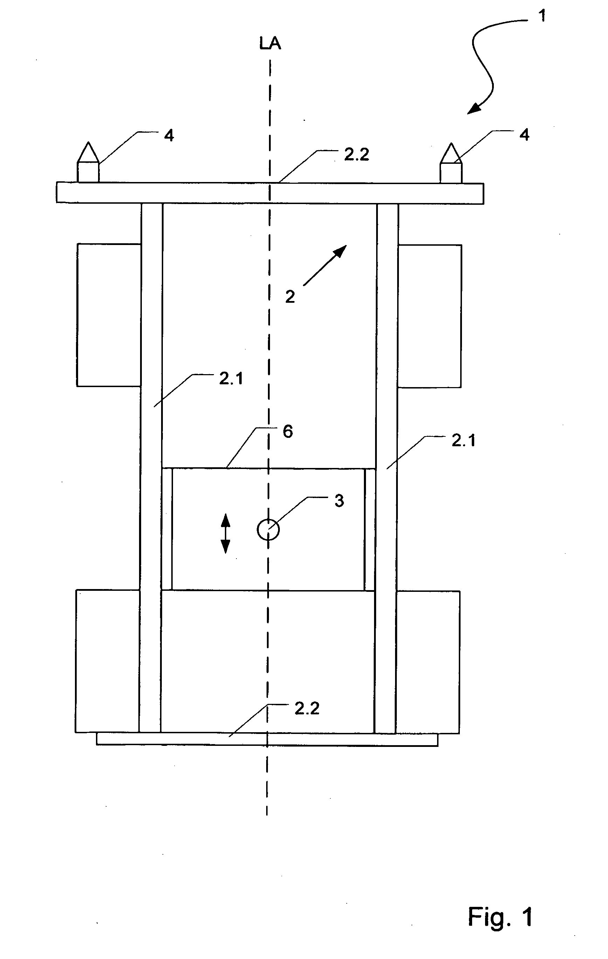

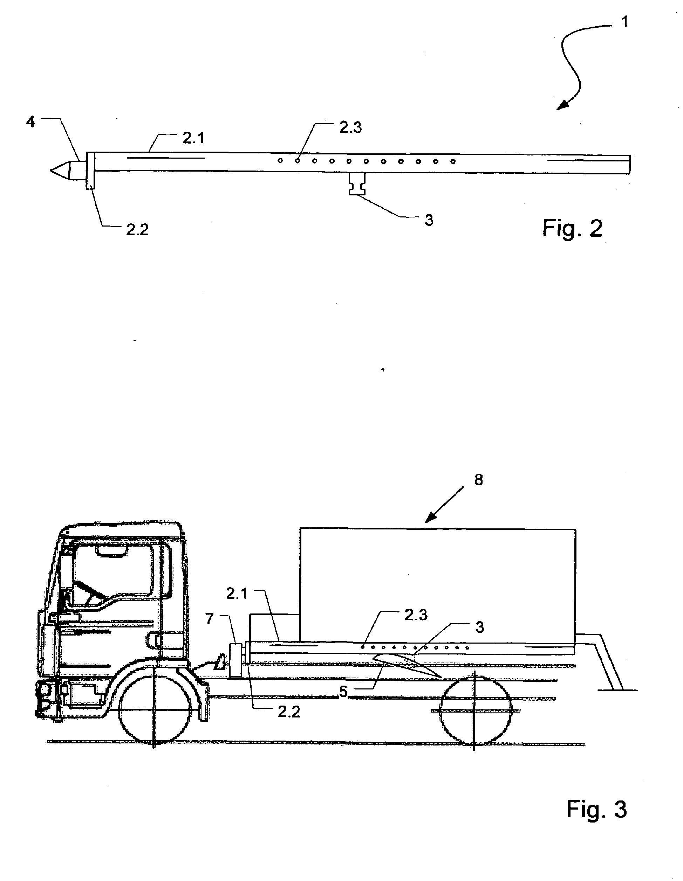

In den Figuren 1 und 2 ist mit dem Bezugszeichen 1 ein Schnellwechselrahmen für Aufbauten von Nutzfahrzeugen gezeigt. Der Schnellwechselrahmen 1 besteht im Wesentlichen aus einer Rahmenkonstruktion 2 mit zwei zueinander parallelen, beabstandeten Längsträgern 2.1 und zwei diese Längsträger 2.1 in Querrichtung verbindenden Querträgern 2.2. Zur Befestigung der Rahmenkonstruktion 2 an dem Nutzfahrzeug sind Befestigungselemente vorgesehen, mittels denen die auf die Rahmenkonstruktion 2 bzw. die darauf befestigten Aufbauten wirkenden Kräfte auf den Rahmen des Nutzfahrzeugs übertragen werden.

Erfindungsgemäß wird ein Befestigungselement durch einen Zapfen 3 gebildet, der von der durch die Rahmenkonstruktion 2 aufgespannten Ebene nach unten absteht. Dieser Zapfen 3 ist insbesondere als Königszapfen zum Zusammenwirken mit einer Sattelkupplung mit einer Sattelzugmaschine ausgebildet. Der Zapfen 3 weist hierbei eine umfangsseitige Einkerbung auf, die vorzugsweise vollumfänglich den Durchmesser des Zapfens 3 über eine Teillänge verringert.

Vorzugsweise ist der Zapfen 3 an einem Zwischenträger 6 angeordnet, der in Querrichtung senkrecht zu Längsachse LA zwischen den Längsträgern 2.1 verläuft und an diesen Längsträgern 2.1 vorzugsweise lösbar befestigt ist. Die lösbare Befestigung des Zwischenträgers 6 kann insbesondere durch Verschraubung erfolgen. Im gezeigten Ausführungsbeispiel ist in die Längsträger 2.1 jeweils eine Vielzahl von Bohrungen 2.3 eingebracht, die rasterförmig entlang der Längsachse LA angeordnet sind. Mittels dieser Bohrungen 2.3 kann der Zwischenträger 6 an unterschiedlichen Positionen entlang der Längsachse LA an den Längsträgern 2.1 befestigt werden, so dass die Position des Zapfens 3 innerhalb der Rahmenkonstruktion 2 in Längsrichtung, wie durch den Doppelpfeil in Figur 1 angedeutet, variiert werden kann. Dadurch kann der Schnellwechselrahmen 1 individuell an das jeweilige Nutzfahrzeug, insbesondere an die jeweilige Lage der Sattelkupplung 5 an der Sattelzugmaschine angepasst werden.

Als weitere Befestigungselemente weist die Rahmenkonstruktion 2 in den vorderen Eckbereichen der Rahmenkonstruktion 2 jeweils einen in Richtung der Längsachse LA abstehenden Führungszapfen 4 auf. Diese Führungszapfen 4 sind vorzugsweise zylindrisch mit einem konisch zulaufenden freien Ende ausgebildet. Am Rahmen des Nutzfahrzeugs ist eine Zapfenaufnahme 7 vorgesehen, die im gezeigten Ausführungsbeispiel Führungshülsen ausbildet, wobei in einer Führungshülse jeweils ein Führungszapfen 4 in Richtung der Längsachse LA eingeführt und passgenau aufgenommen werden kann. Alternativ hierzu können am Nutzfahrzeug die Führungszapfen 4 und an der Rahmenkonstruktion 2 die Zapfenaufnahme 7 vorgesehen werden.

Die Montage des Schnellwechselrahmens 1 am Nutzfahrzeug erfolgt derart, dass der vorzugsweise auf Abstellfüßen aufgeständerte Schnellwechselrahmen 1 von der Sattelzugmaschine in Richtung der Längsachse LA des Schnellwechselrahmens 1 unterfahren wird. Dabei wird der Zapfen 3 mit der Einkerbung von der Sattelkupplung 5 der Sattelzugmaschine aufgenommen und die Führungszapfen 4 in die Zapfenaufnahme 7 eingeführt. Nach der Verriegelung der Sattelkupplung 5 wird der Zapfen 3 im Bereich seiner Einkerbung formschlüssig von der Sattelkupplung 5 umgriffen, so dass sich der Zapfen 3 nicht aus der Sattelkupplung 5 lösen kann. Der Zapfen 3 bzw. der Zwischenträger 6 ist derart ausgelegt, dass diese Elemente die Längs- und Querkräfte des Schnellwechselrahmens 1 bzw. der darauf montierten Aufbauten aufnehmen. Die Führungszapfen 4 dienen vornehmlich als Verdrehsicherung des Schnellwechselrahmens 1 um die Achse des Zapfens 3 gegenüber dem Nutzfahrzeug.

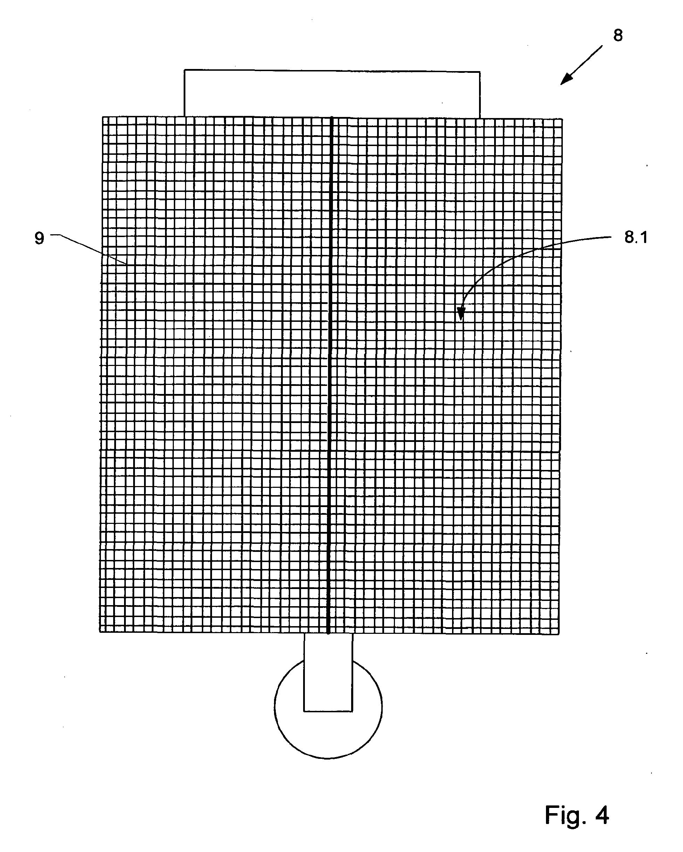

Der Schnellwechselrahmen 1 ist, wie in Figur 3 gezeigt, vorzugsweise zur Aufnahme eines Streuaufsatzes 8 für den Winterdienst ausgebildet. Um das zulässige Gesamtgewicht des Nutzfahrzeugs optimal ausnutzen zu können, ist der Streuaufsatz in Leichtbauweise ausgebildet. Dies kann insbesondere durch die Verwendung von leicht bauenden Metallen bzw. Kunststoffen für die Wandung des Streuaufsatzes 8 erfolgen. Besonders bevorzugt ist zur Gewichtsreduzierung die oberseitige Öffnung 8.1 des Streuaufsatzes 8, über die Streugut in den Streuaufsatz 8 eingefüllt wird, mit einem Kunststoffgitter 9 oder mehreren Kunststoffgitterelementen zumindest teilweise überspannt (Fig. 4). Durch den Einsatz eines Kunststoffgitters 9, das insbesondere selbsttragend und/oder begehbar ausgebildet ist, kann im Gegensatz zu herkömmlich verwendeten Stahlgittern auf einen massiven umlaufenden äußeren Rahmen verzichtet werden. Das Kunststoffgitter 9 weist vorzugsweise durchgehend eine konstante Dicke auf, sodass auch ohne äußere Rahmenkonstruktion eine hohe Stabilität des Gitters erreicht wird. Zur weiteren Erhöhung der Stabilität kann das Kunststoffgitter 9 zudem eine Glasfaserverstärkung aufweisen. Neben der Gewichtseinsparung, die zu einer höheren, verfügbaren Nutzlast für das Streugut und einem niedrigeren Treibstoffverbrauch des Nutzfahrzeugs führt, wird zudem die Korrosion der Gitterabdeckung, wie sie bei herkömmlichen lackierten Stahlgittern vorkommt, vermieden.

Zur Ansteuerung des Streuaufsatzes 8 und/oder eines am Nutzfahrzeug montierten Schneepfluges ist am Nutzfahrzeug eine Steuerungsvorrichtung 10 vorgesehen, die zweiteilig ausgebildet ist. Im Führerhaus des Nutzfahrzeugs ist eine Bedieneinheit 11 vorgesehen, die mit einer am Schnellwechselrahmen 1 oder am Streuaufsatz 8 angeordneten Steuerungseinheit 12 zusammenwirkt. Die Bedieneinheit 11 weist beispielsweise eine Anzeige 11.1 und mehrere Bedienelemente 11.2 auf, über die die Abgabe des Streugutes, insbesondere die Streubreite und die Streumenge pro Quadratmeter geregelt werden kann. Die Steuerungseinheit 12 ist zur Ansteuerung mehrerer vorzugsweise hydraulischer Regelventile 12.1 bzw. Verbraucher 12.2 ausgebildet.

Um den auf dem Schnellwechselrahmen 1 befestigten Streuaufsatz 8 zeitsparend montieren bzw. demontieren zu können, erfolgt die Kommunikation zwischen der Bedieneinheit 11 und der Steuerungseinheit 12 über eine drahtlose Schnittstelle 13. Diese drahtlose Schnittstelle 13 kann insbesondere eine Funkschnittstelle oder eine optische Schnittstelle sein. Dadurch müssen beim Wechsel des Schnellwechselrahmens 1 lediglich die Hydraulikanlage bzw. die elektrische Anlage des Schnellwechselrahmens bzw. des Streuaufsatzes mit dem Nutzfahrzeug gekoppelt werden.

Vorzugsweise erfolgt die Steuerung des Streuaufsatzes 8 geschwindigkeitsabhängig. Hierzu wird an die am Schnellwechselrahmen oder am Streuaufsatz 8 vorgesehene Steuerungseinheit 12 ein Geschwindigkeitssignal v übertragen, das beispielsweise ein zur Geschwindigkeit proportionales Spannungssignal ist. Mittels der Steuerungseinrichtung 12 wird abhängig vom Geschwindigkeitssignal v die Abgabe des Streumittels geregelt bzw. gesteuert.

Des weiteren ist die Steuerungseinheit zum Empfang von Rückmeldungen R, die insbesondere von den Regelventilen 12.1 oder den Verbrauchern 12.2 stammen können, ausgebildet. Diese Rückmeldungen R werden von der Steuerungseinheit 12 verarbeitet und gegebenenfalls über die drahtlose Schnittstelle 13 an die Bedieneinheit 11 übertragen, um dort beispielsweise eine optische oder akustische Ausgabe an der Bedieneinheit 11 zu erzeugen.

In einem bevorzugten Ausführungsbeispiel ist die Drahtlosverbindung 13 zwischen der Bedieneinheit 11 und der Steuerungseinheit 12 bidirektional ausgebildet, d.h. die Bedieneinheit 11 kann sowohl Daten an die Steuerungseinheit 12 versenden als auch Daten von der Steuerungseinheit 12 empfangen. Die Bidirektionalität der Verbindung ermöglicht beispielsweise Rückfragen über gewisse Zustände oder Regelsollgrößen bei der Bedieneinheit 11.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Schnellwechselrahmen
- 2: Rahmenkonstruktion
- 2.1: Längsträger
- 2.2: Querträger
- 2.3: Bohrung
- 3: Zapfen
- 4: Führungszapfen
- 5: Sattelkupplung
- 6: Zwischenträger
- 7: Zapfenaufnahme
- 8: Streuaufsatz
- 8.1: Öffnung
- 9: Kunststoffgitter
- 10: Steuerungsvorrichtung
- 11: Bedieneinheit
- 11.1: Anzeige
- 11.2: Bedienelemente
- 12: Steuerungseinheit
- 12.1: Regelventil
- 12.2: Verbraucher
- 13: drahtlose Schnittstelle

- LA: Längsachse
- R: Rückmeldung
- v: Geschwindigkeitssignal

## Patentansprüche

1. Schnellwechselrahmen für Aufbauten von Nutzfahrzeugen umfassend eine Rahmenkonstruktion (2) aus zumindest zwei Längsträgern (2.1) und zumindest zwei Querträgern (2.2) sowie Befestigungselementen (3, 4) zur Fixierung der Rahmenkonstruktion (2) auf dem Nutzfahrzeug, dass ein Befestigungselement ein Zapfen (3) ist, der von der durch die Rahmenkonstruktion (2) aufgespannten Ebene nach unten absteht und dass der Zapfen (3) als Königszapfen zum Zusammenwirken mit einer Sattelkupplung (5) einer Sattelzugmaschine ausgebildet ist, **dadurch gekennzeichnet, dass** der Zapfen (3) an einem quer zu den Längsträgern (2.1) verlaufenden Zwischenträger (6) angeordnet ist, wobei der Zwischenträger (6) verstellbar in Richtung der Längsachse (LA) der Rahmenkonstruktion (2) an den Längsträgern (2.1) angeordnet ist.

2. Schnellwechselrahmen nach Anspruch 1, **dadurch gekennzeichnet, dass** an der Rahmenkonstruktion (2) zumindest zwei in Richtung der Längsachse (LA) abstehende Führungszapfen (4) vorgesehen sind, die zum Zusammenwirken mit einer am Nutzfahrzeug vorgesehenen Zapfenaufnahme (7) ausgebildet sind.

3. Schnellwechselrahmen nach Anspruch 1 oder 2, **dadurch gekennzeichnet, dass** an der Rahmenkonstruktion (2) eine Zapfenaufnahme (7) vorgesehen ist, die zum Zusammenwirken mit zumindest zwei in Richtung der Längsachse (LA) der Rahmenkonstruktion (2) abstehenden Führungszapfen (4) ausgebildet ist.

4. Schnellwechselrahmen nach einem der vorhergehenden Ansprüche, **dadurch gekennzeichnet, dass** die Rahmenkonstruktion (2) einen Streuaufsatz (8) für den Winterdienst aufnimmt und dass der Streuaufsatz (8) eine oberseitige Öffnung (8.1) aufweist, die durch ein Kunststoffgitter (9) oder mehrere Kunststoffgitterelemente zumindest teilweise überspannt ist.

5. Schnellwechselrahmen nach Anspruch 4, **dadurch gekennzeichnet, dass** das Kunststoffgitter (9) eine Glasfaserverstärkung aufweist.

6. Schnellwechselrahmen nach Anspruch 4 oder 5, **dadurch gekennzeichnet, dass** das Kunststoffgitter (9) selbsttragend und/oder begehbar ausgebildet ist.

7. Schnellwechselrahmen nach einem der Ansprüche 4 bis 6, **dadurch gekennzeichnet, dass** zur Ansteuerung des Streuaufsatzes (8) eine Steuerungsvorrichtung (10) mit einer Bedieneinheit (11) im Nutzfahrzeug und einer Steuerungseinheit (12) am Schnellwechselrahmen(1) oder am Streuaufsatz (8) verwendet wird und dass die Bedieneinheit (11) und die Steuerungseinheit (12) zur Kommunikation untereinander über eine Drahtlosverbindung (13) ausgebildet sind.

8. Schnellwechselrahmen nach Anspruch 7, **dadurch gekennzeichnet, dass** die Drahtlosverbindung (13) zur bidirektionalen Kommunikation ausgebildet ist.

9. Schnellwechselrahmen nach Anspruch 7 oder 8, **dadurch gekennzeichnet, dass** die Steuerungsvorrichtung (10) zur geschwindigkeitsabhängigen Abgabe des Streumittels ausgebildet ist.

10. Nutzfahrzeug mit einem Schnellwechselrahmen nach einem der vorhergehenden Ansprüche.

## Claims

1. A quick-change frame for superstructures of commercial vehicles, comprising a frame construction (2) consisting of at least two longitudinal beams (2.1) and at least two transverse beams (2.2) as well as fastening elements (3, 4) for fixing the frame construction (2) on the commercial vehicle, one fastening element is a pin (3), which protrudes downwards from the plane spanned by the frame construction (2), and the pin (3) is constructed as a kingpin for interaction with a fifth-wheel coupling (5) of a trailer tractor, **characterised in that** the pin (3) is arranged on an intermediate beam (6) running transversely to the longitudinal beams (2.1), wherein the intermediate beam (6) is adjustably arranged on the longitudinal beams (2.1) in the direction of the longitudinal axis (LA) of the frame construction (2).

2. The quick-change frame according to claim 1, **characterised in that** at least two guide pins (4) protruding in the direction of the longitudinal axis (LA) are provided on the frame construction (2), which guide pins are constructed for interaction with a pin receptacle (7) provided on the commercial vehicle.

3. The quick-change frame according to claim 1 or 2, **characterised in that** a pin receptacle (7) is provided on the frame construction (2), which is constructed for interaction with at least two guide pins (4) protruding in the direction of the longitudinal axis (LA) of the frame construction (2).

4. The quick-change frame according to one of the preceding claims, **characterised in that** the frame construction (2) accommodates a scattering attachment (8) for winter road clearance and **in that** the scattering attachment (8) has an upper-side opening (8.1), which is spanned at least to some extent by a plastic grid (9) or a plurality of plastic-grid elements.

5. The quick-change frame according to claim 4, **characterised in that** the plastic grid (9) comprises a glass-fibre reinforcement.

6. The quick-change frame according to claim 4 or 5, **characterised in that** the plastic grid (9) is constructed in a self-supporting and/or walk-on-able manner.

7. The quick-change frame according to one of claims 4 to 6, **characterised in that** a control device (10) with an operating unit (11) in the commercial vehicle and a control unit (12) on the quick-change frame (1) or on the scattering attachment (8) is used for controlling the scattering attachment (8) and **in that** the operating unit (11) and the control unit (12) are designed for communication between one another via a wireless connection (13).

8. The quick-change frame according to claim 7, **characterised in that** the wireless connection (13) is designed for bidirectional communication.

9. The quick-change frame according to claim 7 or 8, **characterised in that** the control device (10) is constructed for speed-dependent output of the gritting material.

10. A commercial vehicle with a quick-change frame according to one of the preceding claims.

## Revendications

1. Châssis de montage rapide pour des caisses de véhicules utilitaires, comprenant une structure de châssis (2) constituée d'au moins deux supports longitudinaux (2.1) et d'au moins deux supports transversaux (2.2), ainsi que des éléments de fixation (3, 4) pour la fixation de la structure de châssis (2) sur le véhicule utilitaire, un élément de fixation étant un pivot (3) faisant saillie vers le bas par rapport au plan défini par la structure de châssis (2), et le pivot (3) étant conçu comme un pivot central destiné à coopérer avec une sellette d'attelage (5) d'un tracteur semi-remorque, **caractérisé en ce que** le pivot (3) est agencé sur un support intermédiaire (6) s'étendant transversalement aux supports longitudinaux (2.1), le support intermédiaire (6) étant agencé sur les supports longitudinaux (2.1) de manière à pouvoir être réglé dans la direction de l'axe longitudinal (LA) de la structure de châssis (2).

2. Châssis de montage rapide selon la revendication 1, **caractérisé en ce que** sur la structure de châssis (2), il est prévu au moins deux pivots de guidage (4) faisant saillie dans la direction de l'axe longitudinal (LA), lesquels sont conçus pour coopérer avec une admission de pivot (7) prévue sur le véhicule utilitaire.

3. Châssis de montage rapide selon la revendication 1 ou 2, **caractérisé en ce que** sur la structure de châssis (2), il est prévu une admission de pivot (7) conçue pour coopérer avec au moins deux pivots de guidage (4) faisant saillie dans la direction de l'axe longitudinal (LA) de la structure de châssis (2).

4. Châssis de montage rapide selon l'une des revendications précédentes, **caractérisé en ce que** la structure de châssis (2) reçoit une coiffe d'épandage (8) pour le service hivernal, et **en ce que** la coiffe d'épandage (8) présente une ouverture supérieure (8.1) au moins partiellement recouverte par une grille en plastique (9) ou par plusieurs éléments de grille en plastique.

5. Châssis de montage rapide selon la revendication 4, **caractérisé en ce que** la grille en plastique (9) est renforcée par des fibres de verre.

6. Châssis de montage rapide selon la revendication 4 ou 5, **caractérisé en ce que** la grille en plastique (9) est conçue de manière à être autoportante et/ou accessible.

7. Châssis de montage rapide selon l'une des revendications 4 à 6, **caractérisé en ce qu'**un dispositif de commande (10), avec une unité de manoeuvre (11) dans le véhicule utilitaire et une unité de commande (12) sur le châssis de montage rapide (1) ou sur la coiffe d'épandage (8), est utilisé pour l'actionnement de la coiffe d'épandage (8), et **en ce que** l'unité de manoeuvre (11) et l'unité de commande (12) sont conçues de manière à communiquer entre elles par le biais d'une liaison sans fil (13).

8. Châssis de montage rapide selon la revendication 7, **caractérisé en ce que** la liaison sans fil (13) est conçue pour une communication bidirectionnelle.

9. Châssis de montage rapide selon la revendication 7 ou 8, **caractérisé en ce que** le dispositif de commande (10) est conçu pour une distribution de produit d'épandage en fonction de la vitesse.

10. Véhicule utilitaire avec un châssis de montage rapide selon l'une des revendications précédentes.
